# FASCICULE DE BREVET EUROPEEN

(11) **EP 3 119 616 B1**
(45) Date de publication et mention de la délivrance du brevet: **28.02.2018**
(21) Numéro de dépôt: 15710484.5
(22) Date de dépôt: 16.03.2015
(51) Int. Cl.: B60C 11/11

(54) **BANDE DE ROULEMENT COMPORTANT DES CREUX POUR PNEU D'ENGIN DE GÉNIE CIVIL**
PROFIL MIT HOHLRÄUMEN FÜR REIFEN EINES TIEFBAUFAHRZEUGES
TREAD COMPRISING VOIDS FOR CIVIL ENGINEERING VEHICLE TYRE

(30) Priorité: 18.03.2014 FR 1452242
(43) Date de publication de la demande: 25.01.2017
(73) Titulaire: Compagnie Générale des Etablissements Michelin, 63000 Clermont-Ferrand (FR)
(72) Inventeur: NUGIER, Franck, F-63040 Clermont-Ferrand Cedex 9 (FR); CHAUVIN, Dominique, F-63040 Clermont-Ferrand Cedex 9 (FR); LARREGAIN, Arnaud, F-63040 Clermont-Ferrand Cedex 9 (FR)
(74) Mandataire: Diernaz, Christian
(86) Numéro de dépôt international: PCT/EP2015/055474
(87) Numéro de publication internationale: WO 2015/140122

(56) Documents cités:
- EP-A1- 2 436 537
- WO-A1-96/01190
- US-A1- 2013 086 821

## Description

### DOMAINE DE L'INVENTION

La présente invention concerne une bande de roulement de pneu pour engin de génie civil comme un tombereau (*"dumper* " en anglais) et plus particulièrement certains éléments de la sculpture d'une telle bande.

### ÉTAT DE LA TECHNIQUE

L'exploitation des mines nécessite le recours à l'emploi de véhicules adaptés pouvant notamment porter de très lourdes charges de matériaux traités dans ces mines en parcourant de plus ou moins grandes distances sur des sols à plus ou moins forte déclivité et très souvent recouverts de corps pouvant altérer les performances d'adhérence que ce soit en motricité ou en freinage ou encore en tenue de cap. Ces véhicules de grande capacité de charge en matériaux sont équipés de pneus de dimensions et capacité appropriées pour permettre le déplacement de très grandes quantités de matériaux. Ces pneus sont de dimensions très importantes et notamment bien supérieures à celles des pneus destinés à des véhicules poids lourd.

Chacun de ces pneus est pourvu d'une bande de roulement de forte épaisseur à user (au moins 60 mm). En outre, cette bande de roulement est pourvue d'une sculpture formée de cavités telles des rainures et incisions générant à la fois des parties en cavité aptes à capter de la matière ou de l'eau lors du passage dans le contact avec un sol au cours du roulage et des arêtes utiles pour satisfaire aux exigences en terme d'adhérence que ce soit en motricité ou en freinage ou encore en virage.

Les contraintes d'usage des véhicules sont telles qu'il est d'usage de monter des pneus neufs sur l'essieu avant de tels véhicules et de les retirer pour les monter sur l'essieu arrière pour terminer d'user leur bande de roulement. Le changement de position se fait en règle générale dès lors que l'usure de la bande de roulement est égale ou voisine du tiers de l'épaisseur de matière à user.

Il est en outre connu de former des cavités ou creux pour permettre un refroidissement des parties les plus massives et épaisses comme les bords axialement à l'extérieur de la bande de roulement. Ces cavités sont en général ouvertes soit latéralement à la bande de roulement soit sur la surface de roulement.

Les demanderesses se sont fixé pour objectif d'optimiser le dessin de sculpture de la bande de roulement d'un pneu pour ce type de véhicule sous la contrainte de changement de position sur le véhicule en cours de vie du pneu tout en bénéficiant d'un effet de refroidissement des parties massives par la mise en oeuvre de cavités améliorées.

Une bande de roulement comportant des cavités est également connue du document US-A-20130086821.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Un bloc est un élément de relief formé sur une bande de roulement, cet élément étant délimité par des rainures orientées circonférentiellement et des rainures orientées transversalement. Un bloc comprend plus de deux parois latérales et une face de contact.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Une bande de roulement a une épaisseur maximale EMU de matière à user en roulage ; une fois cette épaisseur atteinte le pneu doit être remplacé par un autre pneu neuf.

Une cavité est un volume en creux formé dans un élément en relief d'une bande de roulement. Cette cavité est délimitée, sur la face de contact de l'élément en relief, par une arête formant un contour fermé sur lui-même ou par une pluralité d'arêtes formant un contour fermé.

### BREF EXPOSÉ DE L INVENTION

La présente invention vise à proposer une bande de roulement pour pneu de véhicule de travaux de génie civil, cette bande ayant une épaisseur de matière à user EMU au moins égale à 60 mm et étant pourvue d'un motif de sculpture déterminé par la présence de rainures, d'incisions et de cavité de manière plus générique.

À cet effet, l'invention a pour objet une bande de roulement pour pneu de véhicule de travaux de génie civil, ce véhicule étant destiné à porter de très lourdes charges (au moins 20 tonnes à pression d'usage par pneu), cette bande de roulement ayant une épaisseur de matière à user EMU mesurée à l'état neuf entre une surface (dite surface de roulement) destinée à venir en contact avec un sol et une limite d'usure. Cette surface de roulement s'étend circonférentiellement tout autour du pneu et est limitée axialement par des parties de bord définissant une largeur maximale pour cette bande. Lorsque la limite d'usure est atteinte, il est requis de changer le pneu ou de le rechaper c'est-à-dire lui remettre une nouvelle bande de roulement.

Cette bande comprend des parties massives formant des éléments de relief délimités par des rainures, chaque partie massive comprenant une face de contact et s'ouvrant sur cette face de contact au moins une cavité de profondeur maximale au moins supérieure à 30% de l'épaisseur à user EMU, chaque cavité s'ouvrant sur la surface de roulement à l'état neuf et étant délimitée par une surface de paroi et une surface de fond. Chaque surface de paroi délimitant une cavité coupant la surface de roulement selon un contour d'arêtes ayant une géométrie présentant un grand axe et un petit axe, la longueur du grand axe étant au moins égale à 1,5 fois la longueur du petit axe à l'état neuf.

Cette bande de roulement est en outre telle que :
- pour toute surface de roulement jusqu'à un niveau d'usure prédéfini, ce niveau étant inférieur à la profondeur de chaque cavité, le contour d'arêtes de chaque cavité pris sur ladite surface de roulement est tel que l'angle du grand axe avec la direction circonférentielle est au moins égal à 0 degré et au plus égal à 40°, et en ce que :
- à partir du niveau d'usure prédéfini, l'angle du grand axe avec la direction circonférentielle est supérieur à 40 degrés et est plus grand que l'angle du grand axe avec la direction circonférentielle sur la surface de roulement à l'état neuf.

Par grand axe on entend un segment de droite passant par deux points les plus éloignés du profil d'arête sur la surface de roulement considérée; par petit axe on entend un segment de droite coupant le grand axe en son milieu et perpendiculaire à ce grand axe. Les longueurs respectives du grand axe et du petit axe sont mesurées entre les points d'intersection des segments prédéfinis avec le profil d'arête.

Préférentiellement, chaque cavité (5) a une profondeur maximale au moins supérieure à 50% de l'épaisseur à user EMU.

Il est avantageux que le niveau d'usure prédéfini soit égal ou supérieur au tiers de la profondeur des cavités.

Préférentiellement les cavités sont formées sur les parties de bord délimitant axialement la bande de roulement.

Préférentiellement la longueur du grand axe après une usure prédéfinie est au plus égale à 1.25 fois la longueur du petit axe.

Dans une variante avantageuse, l'angle que fait le grand axe avec la direction circonférentielle varie de manière discontinue, la discontinuité se produisant au niveau d'usure prédéfini.

Dans une autre variante avantageuse, l'angle que fait le grand axe avec la direction circonférentielle varie de manière continue et croissante entre la surface de roulement à l'état neuf et le fond de chaque cavité.

Pour réduire le risque de capture de corps étrangers à l'intérieur des cavités il est possible de mouler des cavités dont les parois forment un angle de dépouille tel que la surface de chaque cavité sur la surface de roulement diminue avec l'usure de la bande.

L'invention concerne également un pneu pourvu d'une bande de roulement telle que précédemment définie, ce pneu étant destiné à équiper dans un premier temps un essieu avant d'un véhicule de génie civil destiné à porter de très lourdes charges. Après une usure prédéfinie ce pneu est déposé de l'essieu avant pour être monté sur un essieu arrière de ce véhicule ou d'un autre véhicule de même type.

Dans la configuration du pneu neuf, l'orientation préférentielle et le rapport des longueurs du grand axe et du petit axe sont bénéfiques pour obtenir une bonne adhérence en virage tandis que après une usure prédéfinie, l'orientation augmentée du grand axe avec la direction circonférentielle ainsi qu'un rapport diminué entre les longueurs du grand et du petit axe permettre lorsque ce pneu est monté sur un essieu arrière d'obtenir de bonnes performances en motricité et freinage.

D'autres caractéristiques et avantages de l'invention ressortent de la description faite ci-après en référence au dessin annexé qui montre, à titre d'exemple non limitatif, une forme de réalisation de l'objet de l'invention.

### BRÈVE DESCRIPTION DES FIGURES

La figure 1 représente une vue partielle d'une sculpture d'une bande de roulement selon l'invention, cette bande étant représentée à l'état neuf ;
La figure 2 montre la bande de roulement de la figure 1 après une usure partielle correspondant au tiers de l'épaisseur de matière à user.

### DESCRIPTION DES FIGURES

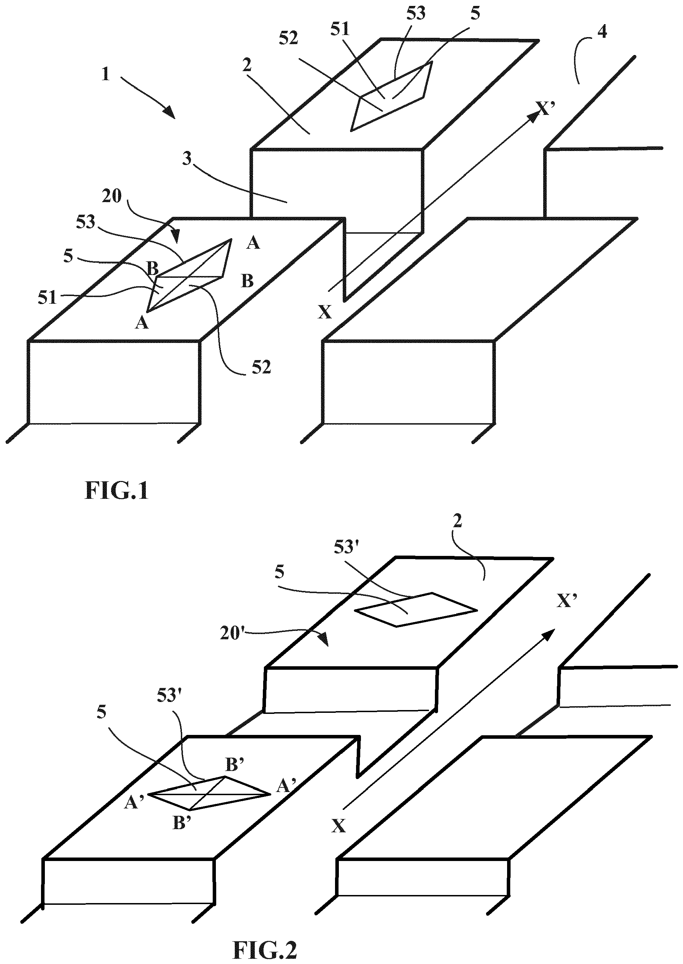

La figure 1 représente une vue partielle d'une variante de sculpture d'une bande de roulement 1 selon l'invention, cette bande de roulement 1 étant représentée à l'état neuf, c'est-à-dire avant tout roulage.

Sur cette figure 1, on distingue une partie formant une épaule de la bande, cette partie étant constituée d'une pluralité de blocs 2 délimités par des rainures transversales 3 coupant une rainure 4 d'orientation circonférentielle. Ces rainures transversales et circonférentielles ont une même profondeur correspondant sensiblement à l'épaisseur EMU de matière à user en roulage. Dans le cas présent, la profondeur des rainures est égale à 100 mm.

Sur cette figure la direction circonférentielle est matérialisée par une flèche XX' s'étendant dans la rainure circonférentielle.

Chaque bloc 2 de la partie épaule comprend des faces latérales et une face de contact 20 destinée à venir en contact avec un sol pendant le roulage. Les intersections de la face de contact 20 avec les faces latérales forment dans le cas présent quatre arêtes utiles à la motricité du pneu.

En outre, il est moulé dans chaque bloc 2 une cavité unique 5 ayant une profondeur sensiblement égale à la profondeur des rainures délimitant ce bloc (environ 100 mm). Chaque cavité 5 s'ouvre sur la face de contact 20 du bloc 2 et est délimitée par une paroi latérale 51 et une paroi de fond 52. Chaque cavité 5 coupe la face de contact 20 selon un contour d'arêtes 53, ce contour 53 ayant une géométrie en forme de losange, ce losange ayant un grand axe AA et un petit axe BB.

Dans le cas présent, et à l'état neuf, la longueur du grand axe AA est 1.5 fois plus grand que la longueur du petit axe BB.

Dans cette configuration le pneu destiné à équiper un véhicule destiné à porter de très lourdes charges est monté sur un essieu avant.

Après une usure partielle prédéfinie de la bande de roulement, la bande selon l'invention se présente dans la configuration montrée avec la figure 2. Dans le cas présent l'usure prédéfinie est égale au tiers de l'épaisseur de matière à user totale.

Sur la figure 2 montrant la bande de roulement de la figure 1 après une usure partielle correspondant au tiers de la profondeur des cavités, on distingue sur chaque bloc 2 de la partie épaule, la présence d'une cavité 5 dont la profondeur totale a diminué et dont le contour d'arêtes 53' sur la face de contact 20' conserve une forme de losange mais cette forme a tourné autour d'un axe perpendiculaire à la face de contact.

Dans le cas présent, l'angle que fait le grand axe A'A' est égal à 90 degrés avec la direction circonférentielle (matérialisée par la flèche XX').

Cette configuration est ensuite conservée jusqu'à usure complète de la bande de roulement.

Dans une variante non montrée ici, la cavité réalisée sur les blocs est telle que la surface délimitée par le contour d'arêtes sur la face de contact est maximale à l'état neuf et diminue progressivement avec l'usure tout en présentant une rotation progressive de son grand axe avec l'usure. L'intérêt d'une telle disposition est de faciliter le moulage et le démoulage de la bande de roulement.

Grâce aux dispositions selon l'invention décrites notamment avec ces variantes, il a été possible d'améliorer sensiblement la motricité des pneus en longitudinal et en transversal tout en réduisant le niveau thermique en fonctionnement et cela quel que soit l'état d'usure de la bande de roulement.

L'invention qui a été décrite ne doit bien entendu pas être limitée à ces exemples et diverses modifications peuvent y être apportées sans sortir du cadre défini par les revendications.

## Revendications

1. Bande de roulement (1) pour pneu de véhicule de travaux de génie civil, ce véhicule étant destiné à porter de très lourdes charges, au moins 20 tonnes à pression d'usage par pneu, cette bande de roulement ayant une épaisseur de matière à user EMU mesurée entre une surface de roulement destinée à venir en contact avec un sol et une limite d'usure, cette surface de roulement s'étendant circonférentiellement tout autour du pneu et étant limitée axialement par des parties de bord définissant une largeur maximale pour cette bande, cette bande (1) comprenant des parties massives formant des éléments de relief (2) délimités par des rainures (3, 4), chaque partie massive comprenant une face de contact et s'ouvrant sur cette face de contact (20) au moins une cavité (5) de profondeur maximale au moins supérieure à 30% de l'épaisseur à user EMU, chaque cavité (5) s'ouvrant sur la face de contact (20) à l'état neuf et étant délimitée par une surface de paroi et une surface de fond, chaque surface de paroi (51) délimitant une cavité (5) coupant la face de contact (20) selon un contour d'arêtes (53) ayant une géométrie comprenant un grand axe AA et un petit axe BB, la longueur du grand axe AA étant au moins égale à 1,5 fois la longueur du petit axe BB à l'état neuf, et pour toute surface de roulement jusqu'à un niveau d'usure prédéfini, ce niveau étant inférieur à la profondeur de chaque cavité, le contour d'arêtes (53') de chaque cavité (5) pris sur ladite surface de roulement étant tel que l'angle du grand axe AA avec la direction circonférentielle est au moins égal à 0 degré et au plus égal à 40 degrés, cette bande de roulement étant **caractérisée en ce que**:
à partir du niveau d'usure prédéfini, l'angle du grand axe A'A' avec la direction circonférentielle est supérieur à 40 degrés et est plus grand que l'angle du grand axe AA avec la direction circonférentielle sur la surface de roulement à l'état neuf.

2. Bande de roulement (1) selon la revendication 1 **caractérisée en ce que** chaque cavité (5) a une profondeur maximale au moins supérieure à 50% de l'épaisseur à user EMU.

3. Bande de roulement (1) selon la revendication 2 **caractérisée en ce que** le niveau d'usure prédéfini est égal ou supérieur au tiers de la profondeur des cavités (5).

4. Bande de roulement (1) selon l'une quelconque des revendications 1 à 3 **caractérisée en ce que** les cavités (5) sont formées sur les parties de bord délimitant axialement la bande de roulement.

5. Bande de roulement (1) selon l'une quelconque des revendications 1 à 4 **caractérisée en ce que** la longueur du grand axe AA après une usure prédéfinie est au plus égale à 1.25 fois la longueur du petit axe.

6. Bande de roulement (1) selon l'une quelconque des revendications 1 à 5 **caractérisée en ce que** l'angle que fait le grand axe AA avec la direction circonférentielle varie de manière discontinue, la discontinuité se produisant au niveau d'usure prédéfini.

7. Bande de roulement (1) selon l'une quelconque des revendications 1 à 6 **caractérisée en ce que** l'angle que fait le grand axe AA avec la direction circonférentielle varie de manière continue et croissante entre la surface de roulement à l'état neuf et le fond de chaque cavité (5).

8. Pneu pourvu d'une bande de roulement telle que définie à l'une quelconque des revendications 1 à 7, ce pneu étant destiné à équiper dans un premier temps un essieu avant d'un véhicule de génie civil destiné à porter de très lourdes charges, puis après une usure prédéfinie ce pneu étant déposé de l'essieu avant pour être monté sur un essieu arrière d'un même type de véhicule.

## Patentansprüche

1. Laufstreifen (1) für einen Reifen eines Baufahrzeugs, wobei dieses Fahrzeug dazu bestimmt ist, sehr schwere Lasten zu tragen, mindestens 20 Tonnen bei Gebrauchsdruck pro Reifen, wobei dieser Laufstreifen eine abzunutzende Materialdicke EMU gemessen zwischen einer Lauffläche, die dazu bestimmt ist, mit einem Boden in Kontakt zu kommen, und einer Abnutzungsgrenze hat, wobei diese Lauffläche sich in Umfangsrichtung um den ganzen Reifen herum erstreckt und axial von Randbereichen begrenzt wird, die eine maximale Breite für diesen Streifen definieren, wobei dieser Streifen (1) massive Bereiche enthält, die von Rillen (3, 4) begrenzte Reliefelemente (2) bilden, wobei jeder massive Bereich eine Kontaktseite und sich an dieser Kontaktseite (20) öffnend mindestens einen Hohlraum (5) maximaler Tiefe mindestens größer als 30% der abzunutzenden Dicke EMU enthält, wobei jeder Hohlraum (5) sich an der Kontaktseite (20) im Neuzustand öffnet und von einer Wandfläche und einer Bodenfläche begrenzt wird, wobei jede einen Hohlraum (5) begrenzende Wandfläche (51) die Kontaktseite (20) gemäß einem Umriss von Kanten (53) schneidet, die eine Geometrie haben, die eine große Achse AA und eine kleine Achse BB enthält, wobei die Länge der großen Achse AA mindestens gleich dem 1,5-Fachen der Länge der kleinen Achse BB im Neuzustand ist, und für jede Lauffläche bis zu einem vordefinierten Abnutzungsgrad, wobei dieser Grad geringer als die Tiefe jedes Hohlraums ist, wobei der Kantenumriss (53') jedes Hohlraums (5) an der Lauffläche gesehen so ist, dass der Winkel der großen Achse AA mit der Umfangsrichtung mindestens gleich 0 Grad und höchstens gleich 40 Grad ist, wobei dieser Laufstreifen **dadurch gekennzeichnet ist, dass**:
ausgehend vom vordefinierten Abnutzungsgrad der Winkel der großen Achse A'A' mit der Umfangsrichtung mehr als 40 Grad beträgt und größer ist als der Winkel der großen Achse AA mit der Umfangsrichtung an der Lauffläche im Neuzustand.

2. Laufstreifen (1) nach Anspruch 1, **dadurch gekennzeichnet, dass** jeder Hohlraum (5) eine maximale Tiefe mindestens größer als 50% der abzunutzenden Dicke EMU hat.

3. Laufstreifen (1) nach Anspruch 2, **dadurch gekennzeichnet, dass** der vordefinierte Abnutzungsgrad gleich dem oder größer als das Drittel der Tiefe der Hohlräume (5) ist.

4. Laufstreifen (1) nach einem der Ansprüche 1 bis 3, **dadurch gekennzeichnet, dass** die Hohlräume (5) in den Randbereichen gebildet sind, die den Laufstreifen axial begrenzen.

5. Laufstreifen (1) nach einem der Ansprüche 1 bis 4, **dadurch gekennzeichnet, dass** die Länge der großen Achse AA nach einer vordefinierten Abnutzung höchstens gleich dem 1,25-Fachen der Länge der kleinen Achse ist.

6. Laufstreifen (1) nach einem der Ansprüche 1 bis 5, **dadurch gekennzeichnet, dass** der Winkel, den die große Achse AA mit der Umfangsrichtung bildet, diskontinuierlich variiert, wobei die Diskontinuität beim vordefinierten Abnutzungsgrad entsteht.

7. Laufstreifen (1) nach einem der Ansprüche 1 bis 6, **dadurch gekennzeichnet, dass** der Winkel, den die große Achse AA mit der Umfangsrichtung bildet, kontinuierlich und zunehmend zwischen der Lauffläche im Neuzustand und dem Boden jedes Hohlraums (5) variiert.

8. Reifen, der mit einem Laufstreifen wie in einem der Ansprüche 1 bis 7 definiert ausgestattet ist, wobei dieser Reifen dazu bestimmt ist, zunächst eine Vorderachse eines Baufahrzeugs zu bestücken, das dazu bestimmt ist, sehr schwere Lasten zu tragen, dann nach einer vordefinierten Abnutzung dieser Reifen von der Vorderachse abmontiert wird, um auf eine Hinterachse des gleichen Fahrzeugtyps montiert zu werden.

## Claims

1. Tread (1) for a tyre of a civil engineering work vehicle, this vehicle being intended to carry very heavy loads, at least 20 tonnes at the rated pressure per tyre, this tread having a wearable thickness of material EMU measured between a tread surface that is intended to come into contact with the ground and a wear limit, this tread surface extending circumferentially all around the tyre and being axially bounded by edge parts defining a maximum width for this tread, this tread (1) comprising solid parts forming raised elements (2) delimited by grooves (3, 4), each solid part comprising a contact face and, opening onto this contact face (20), at least one cavity (5) of maximum depth at least greater than 30% of the wearable thickness EMU, each cavity (5) opening onto the contact face (20) when new and being delimited by a wall surface and a bottom surface, each wall surface (51) delimiting a cavity (5) intersecting the contact face (20) along a corner edge contour (53) having a geometry comprising a major axis AA and a minor axis BB, the length of the major axis AA being at least equal to 1.5 times the length of the minor axis BB when new, and for any tread surface down to a predefined level of wear, this level being less than the depth of each cavity, the corner edge contour (53') of each cavity (5) considered on the said tread surface being such that the angle made by the major axis AA and the circumferential direction is at least equal to 0 degrees and at most equal to 40 degrees, this tread being **characterized in that** from the predefined wear level onwards, the angle made by the major axis A'A' and the circumferential direction is greater than 40 degrees and is greater than the angle made by the major axis AA and the circumferential direction on the tread surface when new.

2. Tread (1) according to Claim 1, **characterized in that** each cavity (5) has a maximum depth at least greater than 50% of the wearable thickness EMU.

3. Tread (1) according to Claim 2, **characterized in that** the predefined wear level is equal to or greater than one third of the depth of the cavities (5).

4. Tread (1) according to any one of Claims 1 to 3, **characterized in that** the cavities (5) are formed on the edge parts axially delimiting the tread.

5. Tread (1) according to any one of Claims 1 to 4, **characterized in that** the length of the major axis AA after predefined wear is at most equal to 1.25 times the length of the minor axis.

6. Tread (1) according to any one of Claims 1 to 5, **characterized in that** the angle that the major axis AA makes with the circumferential direction varies discontinuously, the discontinuity occurring at the predefined wear level.

7. Tread (1) according to any one of Claims 1 to 6, **characterized in that** the angle that the major axis AA makes with the circumferential direction varies continuously and increasingly between the tread surface when new and the bottom of each cavity (5).

8. Tyre provided with a tread as defined in any one of Claims 1 to 7, this tyre being intended to be fitted first of all to a front axle of a civil engineering vehicle intended to carry very heavy loads, this tyre then being removed from the front axle when it reaches a predefined wear level and mounted on a rear axle of the same type of vehicle.
